# EUROPÄISCHE PATENTSCHRIFT

(11) **EP 2 758 444 B1**
(45) Veröffentlichungstag und Bekanntmachung des Hinweises auf die Patenterteilung: **24.01.2018**
(21) Anmeldenummer: 12759712.8
(22) Anmeldetag: 17.09.2012
(51) Int. Cl.: C08G 18/32, C08G 18/48, C08G 18/66, C08G 18/73, C08G 18/75, C08G 18/76, D01F 6/70

(54) **THERMOPLASTISCHES POLYURETHAN ZUR HERSTELLUNG HYDROPHILER FASERN**
THERMOPLASTIC POLYURETHANE FOR PRODUCING HYDROPHILIC FIBERS
POLYURÉTHANE THERMOPLASTIQUE POUR LA FABRICATION DE FIBRES HYDROPHILES

(30) Priorität: 20.09.2011 EP 11181899
(43) Veröffentlichungstag der Anmeldung: 30.07.2014
(73) Patentinhaber: Covestro Deutschland AG, 51373 Leverkusen (DE)
(72) Erfinder: DÖRR, Sebastian, 40593 Düsseldorf (DE); PEERLINGS, Henricus, 55595 Spabrücken (DE); WAMPRECHT, Christian, 41472 Neuss (DE); HANSSON, Dennis, S-42456 Gunnilse (SE)
(74) Vertreter: Levpat
(86) Internationale Anmeldenummer: PCT/EP2012/068202
(87) Internationale Veröffentlichungsnummer: WO 2013/041471

(56) Entgegenhaltungen:
- WO-A1-2004/044028
- GB-A- 2 203 158

## Beschreibung

Die Erfindung betrifft ein thermoplastisches Polyurethan, das insbesondere zur Herstellung hydrophiler Fasern verwendet werden kann. Weitere Gegenstände der Erfindung sind ein Verfahren zur Herstellung des erfindungsgemäßen thermoplastischen Polyurethans sowie ein nach dem erfindungsgemäßen Verfahren erhältliches thermoplastisches Polyurethan.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPUs werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponente in einer Stufe (one-shot-Dosierverfahren) erfolgen.

Aus der WO 2004/044028A sind thermoplastische Polyurethane bekannt, die Polyethylenglykole als Baustein enthalten. In dem Dokument ist auch beschrieben, aus diesen thermoplastischen Polyurethanen Fasern herzustellen..Diese zeichnen sich durch eine hohe Durchlässigkeiten für Wasserdampf aus, können allerdings kein Wasser aufnehmen. Sie stellen vielmehr eine Barriere für flüssiges Wasser dar, was im Übrigen auch explizit als zu lösende Aufgabe in der Anmeldung formuliert ist.

Zur Herstellung von Wundauflagen werden Fasern benötigt, die unter Wasseraufnahme quellen können und so ein Gel bilden. Dies ermöglicht es einerseits überschüssige Flüssigkeit von der Wunde weg zu transportieren und andererseits ein für die Wundheilung vorteilhaftes, feuchtes Wundklima zu erzeugen. Wichtig ist dabei, dass die Fasern trotz der erfolgten Wasseraufnahme eine ausreichende mechanische Stabilität behalten, da ansonsten beispielsweise Teile der Fasern in der Wunde zurückbleiben können.

Aufgabe der vorliegenden Erfindung war es daher, ein thermoplastisches Polyurethane bereit zu stellen, dass sich zur Herstellung hydrophiler Fasern eignet, die unter Aufnahme von Wasser quellbar sind und auch im gequollenen Zustand eine ausreichende mechanische Stabilität aufweisen.

Diese Aufgabe ist durch ein thermoplastisches Polyurethan gelöst, dass durch Umsetzung wenigstens folgender Komponenten erhältlich ist:
A) ein Isocyanat mit zwei Isocyanatgruppen,
B1) ein erstes Poly(ethylenglykol)polyetherdiol der Struktur (HO-(CH₂-CH₂-O)ₓ-H) mit zwei Isocyanat-reaktiven Gruppen und einem zahlenmittleren Molekulargewicht Mₙ von ≥ 6000 und ≤ 16000 g/mol,
B2) ein zweites Poly(ethylenglykol)polyetherdiol der Struktur (HO-(CH₂-CH₂-O)ₓ-H) mit zwei Isocyanat-reaktiven Gruppen und einem zahlenmittleren Molekulargewicht Mₙ, das 10 bis 80% des zahlenmittleren Molekulargewichts Mₙ des ersten Poly(ethylenglykol)polyetherdiols B1) entspricht,
C) ein Kettenverlängerer mit zwei Isocyanat-reaktiven Gruppen und einem zahlenmittleren Molekulargewicht Mₙ von ≥ 60 und < 600 g/mol,
D) gegebenenfalls ein Katalysator und
E) gegebenenfalls Hilfsmittel und Zusatzstoffe,
dadurch gekennzeichnet, dass der Kettenverlängerer C) wenigstens eine Verbindung ausgewählt aus Ethandiol, 1,6-Hexandiol, 1,4-Butandiol, 1,12-Dodecandiol, Isophorondiamin, Ethylendiamin, 1,2-Propylendiamin, 1,3-Propylendiamin, N-Methylpropylen-1,3-diamin, N,N'-Dimethylethylendiamin, Terephthalsäure-bis-ethylenglykol, Terephthalsäure-bis-1,4-butandiol, 1,4-Di(-hydroxyethyl)-hydrochinon, bevorzugt Ethandiol, 1,6-Hexandiol, 1,4-Butandiol, 1,12-Dodecandiol und besonders bevorzugt 1,4-Butandiol ist und
wobei das Äquivalenzverhältnis des Isocyanats A) zu den Poly(ethylenglykol)polyetherdiolen B1) und B2) zwischen 1,5 : 1,0 und 10,0 : 1,0 liegt und die NCO-Kennzahl, gebildet aus dem mit 100 multiplizierten Quotienten der Äquivalenzverhältnisse der Isocyanatgruppen und der Summe der Isocyanat-reaktiven Gruppen 90 bis 105 beträgt,

Es hat sich gezeigt, dass aus dem erfindungsgemäßen thermoplastischen Polyurethan hydrophile Fasern hergestellt werden können, die unter Gelbildung Wasser aufnehmen können und im gequollenen Zustand eine ausreichende mechanische Stabilität aufweisen.

Als Isocyanat-reaktive Gruppen werden vorliegend insbesondere Hydroxy- und primäre bzw. sekundäre Amino-Gruppen verstanden.

Gemäß einer bevorzugten Ausführungsform der Erfindung beträgt die NCO-Kennzahl 92 bis 104, bevorzugt 95 bis 102 und besonders bevorzugt 97 bis 100.

### Beschreibung der einzelnen Bausteine

### Isocyanate A)

Als Isocyanat A) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136 , beschrieben sind.

Beispiele für Isocyanate A) sind Ethylendiisocyanat, 1,4-Tetramethylendiisocyanat, 1,12-Dodecandiisocyanat, 1,6-Hexamethylendiisocyanat, cycloaliphatische Diisocyanate, wie Isophorondiisocyanat, 1,4-Cyclohexan-diisocyanat, 1-Methyl-2,4- und 2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und aromatische Diisocyanate, wie, 2,4'-Toluylendiisocyanat, Gemische aus 2,4- und 2,6-Toluyiendiisocyanat, 4,4'-Diphenylmethandiisocyanat, 2,4-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat.

Vorzugsweise werden jedoch aliphatische und/oder cycloaliphatische Diisocyanate eingesetzt.

Besonders bevorzugt werden daher als Isocyanat A) eine oder mehrere Verbindungen aus der Gruppe 1,6-Hexamethylendiisocyanat, Isophorondiisocyanat und Dicyclohexylmethandiisocyanat verwendet.

Ganz besonders bevorzugt wird allerdings ausschließlich 1,6-Hexamethylendiisocyanat eingesetzt.

### Polethylenglykol B1) und B2)

Als Poly(ethylenglykol)polyetherdiole B1) und B2) werden Verbindungen bezeichnet, die in an sich bekannter Weise durch Alkoxylierung geeigneter difunktionelle Startermoleküle mit Ethylenoxid zugänglich sind (z.B. beschrieben in Ullmanns Encyclopädie der technischen Chemie, 4. Auflage, Band 19, Verlag Chemie, Weinheim S. 31-38). Neben Ethylenoxid können noch weitere Epoxide wie beispielsweise Propylenoxid oder Butylenoxid zur Herstellung der Poly(ethylenglykol)polyetherdiole eingesetzt werden, wobei der Massenanteil dieser Bausteine, bezogen auf das jeweilige Polyethylenglykol, bevorzugt weniger als 30 Gew.-%, weiter bevorzugt weniger als 15 Gew.% und besonders bevorzugt weniger als 5 Gew.-% beträgt. In einer ganz besonders bevorzugten Ausführungsform wird außer Ethylenoxid kein weiteres Epoxid eingesetzt. Als Startermoleküle kommen Diole wie beispielsweise Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentan-1,3-diol, Di-, Tri- oder Tetraethylenglykol, Dipropylenglykol, Dibutylenglykol, Polybutylenglykole oder Bisphenol A in Frage.

In einer weiteren vorteilhaften Ausführungsform weist das erste Poly(ethylenglykol)polyetherdiol B1) ein zahlenmittleres Molekulargewicht Mn von 6000 bis 12000 g/mol, bevorzugt von 6000 bis 10000 g/mol, besonders bevorzugt von 6000 bis 8000 g/ mol und ganz besonders bevorzugt von 8000 g/mol auf.

In einer weiteren vorteilhaften Ausführungsform weist das zweite Poly(ethylenglykol)polyetherdiol B2) ein zahlenmittleres Molekulargewicht Mn von 600 bis 4000 g/mol, bevorzugt von 1000 bis 3000 g/mol, besonders bevorzugt von 1800 bis 2200 g/ mol und ganz besonders bevorzugt von 2000 g/mol auf.

Ebenfalls bevorzugt ist, wenn das zahlenmittlere Molekulargewicht Mn des zweiten Poly(ethylenglykol)polyetherdiols B2) 10 bis 70%, bevorzugt 15 bis 50 % und besonders bevorzugt 15 bis 33 % des zahlenmittleren Molekulargewichts Mn des ersten Poly(ethylenglykol)polyetherdiols B1) entspricht.

Vorteilhaft ist auch, wenn das Gewichtsverhältnis des ersten Poly(ethylenglykol)polyetherdiols) B1 zu dem) zweiten Poly(ethylenglykol)polyetherdiol B2) im Bereich von 1 bis 30, bevorzugt von 5 bis 25 und ganz besonders bevorzugt von 10 bis 20 liegt.

Der Gehalt an Diolen mit zahlenmittleren Molekulargewichten Mn von 600 bis 16000 g/mol, die neben B) enthalten sind liegt, bezogen auf die Gesamtmasse des Polyurethans, unter 20 Gew.% bevorzugt unter 10 Gew.%, ganz besonders bevorzugt unter 5 Gew.%.

Gemäß einer besonders bevorzugten Ausführungsform der Erfindung ist vorgesehen, dass außer den Poly(ethylenglykol)polyetherdiolen B1) und B2) keine weiteren Diole eines zahlenmittleren Molekulargewichts Mn von ≥ 600 und ≤ 16000 g/mol mit umgesetzt werden.

In einer bevorzugten Ausführungsform werden die Poly(ethylenglykol)polyetherdiole B1) und B2) vor der Reaktion getrocknet, beispielsweise unter vermindertem Druck, z.B. bei 1 bis 800 mbar, und erhöhter Temperatur, z.B. bei 70 bis 150°C; dabei wird eine Reduzierung enthaltener Spuren an Wasser erreicht.

### Kettenverlängerer C)

Als Kettenverlängerer C) kann insbesondere ein aliphatisches Diol oder ein (cyclo)aliphatisches Diamin verwendet werden. Beispiele für geeignete aliphatische Diole sind aliphatische Diole mit 2 bis 14 Kohlenstoffatomen wie Ethandiol, 1,6-Hexandiol, 1,12-Dodecandiol und insbesondere 1,4-Butandiol. Bei den (cyclo)aliphatischen Diaminen kann es sich insbesondere um Isophorondiamin, Ethylendiamin, 1,2-Propylendiamin, 1,3-Propylendiamin, N-Methyl-propylen-1,3-diamin, N,N'-Dimethylethylendiamin handeln. Es können auch Gemische der oben genannten Kettenverlängerer verwendet werden. Daneben können auch kleinere Mengen an Triolen zugesetzt werden.

Bevorzugt ist aber, wenn der Kettenverlängerer C) wenigstens eine Verbindung ausgewählt aus Ethandiol, 1,6-Hexandiol, 1,4-Butandiol, 1,12-Dodecandiol, Isophorondiamin, Ethylendiamin, 1,2-Propylendiamin, 1,3-Propylendiamin, N-Methyl-propylen-1,3-diamin, N,N'-Dimethylethylendiamin, besonders bevorzugt Ethandiol, 1,6-Hexandiol, 1,12 Dodecandiol oder 1,4-Butandiol und ganz besonders bevorzugt 1,4-Butandiol ist.

In einer ganz besonders bevorzugten Ausführungsform wird jedoch als Komponente C) ausschließlich 1,4-Butandiol eingesetzt.

Insbesondere bei Anwendungen mit geringeren Anforderungen an die Lichtstabilität, können auch aromatische Diole und Diamine verwendet werden. Beispiele für geeignete aromatische Diole sind Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon, und ethoxylierte Bisphenole. Beispiele für geeignete aromatische Diamine sind. 2,4-Toluylen-diamin und 2,6-Toluylendiamin, 3,5-Diethyl-2,4-toluylendiamin und 3,5-Diethyl-2,6-toluylendiamin und primäre mono-, di-, tri- oder tetraalkylsubstituierte 4,4'-Diaminodiphenylmethane.

### Katalysator D)

Geeignete Katalysatoren D) sind die im dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)ethanol, Diazabicyclo[2,2,2]octan und ähnliche sowie insbesondere organische Metallverbindungen wie Titansaeureester, Eisenverbindungen oder Zinnverbindungen wie Zinndiacetat, Zinndioctoat, Zinndilaurat oder die Zinndialkylsalze aliphatischer Carbonsaeuren wie Dibutylzinndiacetat oder Dibutylzinndilaurat oder ähnliche. Bevorzugte Katalysatoren sind organische Metallverbindungen, insbesondere Titansaeureester, Eisen-, Zinn-, Zirkon- und Bismuthverbindungen.

Die Gesamtmenge an Katalysatoren in den erfindungsgemäßen TPU beträgt vorzugsweise 0 bis 5 Gew.-%, weiter bevorzugt 0 bis 2 Gew.-% und besonders bevorzugt 0,01 bis 0,5 Gew.-%, bezogen auf die Gesamtmenge an TPU. Zur Regulierung der Katalysewirkung sowie zu Stabilisierung können auch Säurekomponenten mit zugesetzt werden.

### Hilfsmittel und Zusatzstoffe E)

Es können die in der TPU-Chemie üblichen Hilfs- und Zusatzstoffe E) enthalten sein. Typische Hilfs- und Zusatzstoffe sind Gleitmittel und Entformungsmittel, wie Fettsaeureester, deren Metallseifen, Fettsäureamide, Fettsäureesteramide und Silikonverbindungen, Weichmacher, Antiblockmittel, Inhibitoren, Stabilisatoren gegen Hydrolyse, Hitze und Verfärbung, Farbstoffe, Pigmente, biozid wirkende Substanzen sowie anorganische und / oder organische Füllstoffe und deren Mischungen.

Nähere Angaben über die genannten Hilfs- und Zusatzstoffe sind der Fachliteratur wie beispielsweise J.H. Saunders, K.C. Frisch: "High Polymers", Band XVI, Polyurethane, Teil 1 und 2, Interscience Publishers 1962 bzw. 1964 zu entnehmen.

Bevorzugt einzusetzende Antioxidatien sind die an sich bekannten Additive mit phenolischen Strukturelementen, wie sie beispielsweise in R. Gächter, H. Müller (Ed.): Taschenbuch der Kunststoff-Additive, 3. Ausgabe, Hanser Verlag, München 1989, beschrieben werden.

Als mögliche Lichtstabilisatoren können UV-Stabilisatoren, Antioxidantien und / oder HALS-Verbindungen eingesetzt werden. Nähere Angaben sind beispielsweise in H. Zweifel, Plastics Additives Handbook, 2001, 5th Ed., Carl Hanser Verlag, München zu finden.

Typischerweise werden bis zu 10 Gew.-%, bezogen auf die Gesamtmenge an TPU, der üblichen Hilfs- und Zusatzstoffe E) zugesetzt.

Ein weiterer Gegenstand der Erfindung ist ein Verfahren zur Herstellung eines erfindungsgemäßen thermoplastischen Polyurethans bei dem ein Gemisch I) aus den Poly(ethylenglykol)polyetherdiolen) B1), B2) und dem Kettenverlängerer C) hergestellt und das Gemisch I) mit dem Isocyanat A) intensiv vermischt wird.

Gemäß einer bevorzugten Ausführungsform des erfindungsgemäßen Verfahrens wird das Gemisch I) mit dem Isocyanat A) innerhalb von maximal 5 Sekunden homogen vermischt, wobei die Temperaturen des Gemisches I) und des Isocyanats A) vor dem Vermischen ≥ 60 und ≤ 150°C liegen und die Differenz der Temperaturen ≤ 50°C und bevorzugt ≤ 20°C ist.

Bevorzugt ist ebenfalls, wenn das Gemisch I) mit dem Isocyanat A) in einem Statikmischer mit einem Längen/Durchmesser-Verhältnis im Bereich von 8:1 bis 16:1 vermischt wird.

Das erhaltene thermoplastische Polyurethan kann gegebenenfalls auch in einem weiteren Schritt granuliert werden.

Ein weiterer Gegenstand der Erfindung ist ein Verfahren zur kontinuierlichen Herstellung der erfindungsgemäßen thermoplastischen Polyurethane, welches dadurch gekennzeichnet ist, dass das Gemisch I) und der Kettenverlängerer C) kontinuierlich gemischt werden, danach mit dem Isocyanat A) zur Reaktion gebracht werden, die Reaktion in einem Austragsgefäß zu Ende geführt und das Produkt gegebenenfalls granuliert wird. Diese Verfahrensvariante ist besonders bevorzugt.

Die erfindungsgemäßen thermoplastischen Polyurethane können auch nach dem Prepolymerverfahren hergestellt werden, wobei zunächst das Isocyanat A) mit den Poly(ethylenglykol)polyetherdiolen) B1) und B2) zu einem Prepolymeren umgesetzt und dieses Prepolymer in einem zweiten Schritt mit dem Kettenverlängerer C) vermischt und zur Reaktion gebracht wird.

Die erfindungsgemäßen TPU können zur Herstellung von Fasern oder Formkörpern, zur Herstellung von Extrudaten (z.B. Folien) und Spritgießteilen eingesetzt werden. Bevorzugt ist die Herstellung von Fasern, dieses können zu Geweben, Gewirken oder gebundene und ungebundene Vliesen weiter verarbeitet werden. Die jeweiligen Verfahren und Techniken zur Herstellung und Verarbeitung sind dem Fachmann bekannt.

Die Erfindung wird nachfolgend anhand von Beispielen näher erläutert.

### Beispiele

Alle Mengenangaben, Anteile und Prozentanteile sind, soweit nicht anders angegeben, auf das Gewicht und die Gesamtmenge bzw. auf das Gesamtgewicht der Zusammensetzungen bezogen.

Sofern nicht abweichend vermerkt, beziehen sich alle analytischen Messungen auf Messungen bei Temperaturen von 23 °C.

Die Spinnbarkeit wurde getestet mit einem Extruder mit einer Schnecken (18 x 520 mm) mit Mischzonen und einer Spinndüse mit 2 bis 24 Löchern. Die Extrusionsgeschwindigkeit wurde dabei so angepasst, dass die Verweilzeit im Extruder ca. 10 Minuten betrug, die Temperatur der ersten Thermostatierzonen lag bei 85°C und die der Zonen vor der Spinndüse bei 120 bis 210°C. Die Fasern wurden mit einer Wickelmaschine aufgenommen.

### Methoden:

Die NCO-Gehalte wurden, wenn nicht ausdrücklich anders erwähnt, volumetrisch gemäß DIN-EN ISO 11909 bestimmt.

Die Kontrolle auf freie NCO-Gruppen wurde mittels IR-Spektroskopie (Bande bei 2260 cm-1) durchgeführt.

Die Bestimmung des zahlenmittleren Molekulargewichts Mₙ erfolgt durch Gelpermeationschromatographie gegenüber Polystyrol-Standard in Tetrahydrofuran bei 23°C

### Materialien:

Die eingesetzten Isocyanate stammen von der Bayer MaterialScience AG, Leverkusen, DE.

Weitere Chemikalien stammen - soweit nicht anders angegeben - von Sigma-Aldrich Chemie GmbH, Taufkirchen, DE.

### Solution A

In einem Liter entionisiertem Wasser wurden 8,298g Natriumchlorid und 0,368g Calciumchlorid gelöst.

### Poly(ethylenglykol)polyetherdiole

- PEG 8000:: Polyethylenglykol, zahlenmittleres Molekulargewicht Mₙ 8000 g/mol.
- PEG 6000:: Polyethylenglykol, zahlenmittleres Molekulargewicht Mₙ 8000 g/mol.
- PEG 4000:: Polyethylenglykol, zahlenmittleres Molekulargewicht Mₙ 4000 g/mol.
- PEG 2000:: Polyethylenglykol, zahlenmittleres Molekulargewicht Mₙ 2000 g/mol.
- PEG 1000:: Polyethylenglykol, zahlenmittleres Molekulargewicht Mₙ 1000 g/mol.

### Herstellung der thermoplastischen Polyurethane

### Beispiel 1 (erfindungsgemäßes Beispiel)

Eine Mischung aus 547 g PEG 8000 und 34,7 g PEG 2000 wurden für 2 Stunden bei 100 °C unter Rühren in einem Gefäß getrocknet (Vakuum ca. 20 mbar). Die Mischung wurde anschließend unter Stickstoff gerührt und es wurden 0,34 g Dibutylphosphat und 9,6 g 1,12-Dodecandiol zugesetzt. Nach Aufheizen auf 120 °C wurden 34,9 g Methylen-bis (4-cyclohexylisocyanat) sowie 0,34 g Zinn(II)ethylhexanoat zugefügt und das Gefäß wurde erhitzt, bis eine Temperatur von 196 °C erreicht war (ca. 20 Minuten). Das resultierende Polymer wurde anschließend in eine Schale gegossen und eine weitere Stunde bei 105 °C gelagert.

### Beispiel 2 (erfindungsgemäßes Beispiel)

Eine Mischung aus 530,5 g PEG 8000 und 33,6 g PEG 2000 wurden für 2 Stunden bei 100 °C unter Rühren in einem Gefäß getrocknet (Vakuum ca. 20 mbar). Die Mischung wurde anschließend unter Stickstoff gerührt und es wurden 0,66 g Dibutylphosphat und 6,27 g 1,4-Butandiol zugesetzt. Nach Aufheizen auf 120 °C wurden 41,1 g Methylen-bis (4-cyclohexylisocyanat) sowie 0,34 g Borchikat 24 (OMG Borchers GmbH, Langenfeld/Germany) zugefügt und das Gefäß wurde erhitzt, bis eine Temperatur von 196 °C erreicht war (ca. 15 Minuten). Das resultierende Polymer wurde anschließend in eine Schale gegossen und eine weitere Stunde bei 105 °C gelagert.

### Beispiel 3 (erfindungsgemäßes Beispiel)

Eine Mischung aus 526,1 g PEG 8000, 33,4 g PEG 2000 und 16,74 g Hydrochinon bis(2-hydroxyethyl)ether wurden für 2 Stunden bei 100 °C unter Rühren in einem Gefäß getrocknet (Vakuum ca. 20 mbar). Die Mischung wurde anschließend unter Stickstoff gerührt und es wurden 0,3 g Dibutylphosphat zugesetzt. Nach Aufheizen auf 110 °C wurden 26,9 g 1,6-Hexamethylendiisocyanat sowie 0,34 g Zinn(II)ethylhexanoat zugefügt und das Gefäß wurde erhitzt, bis eine Temperatur von 180 °C erreicht war (ca. 5 Minuten). Das resultierende Polymer wurde anschließend in eine Schale gegossen und eine weitere Stunde bei 105 °C gelagert.

### Beispiel 4 (erfindungsgemäßes Beispiel)

Eine Mischung aus 549,7 g PEG 8000 und 34,8g PEG 2000 wurden für 2 Stunden bei 100 °C unter Rühren in einem Gefäß getrocknet (Vakuum ca. 20 mbar). Die Mischung wurde anschließend unter Stickstoff gerührt und es wurden 1,88 g Dibutylphosphat und 6,5 g 1,4-Butandiol zugesetzt. Nach Aufheizen auf 165 °C wurden 38,08 g 4,4-Diphenylmethandiisocyanat zugefügt und das Gefäß wurde erhitzt, bis eine Temperatur von 196 °C erreicht war (ca. 5 Minuten). Das resultierende Polymer wurde anschließend in eine Schale gegossen und eine weitere Stunde bei 105 °C gelagert.

### Beispiel 5 (erfindungsgemäßes Beispiel)

Eine Mischung aus 549,7 g PEG 8000 und 44,7 g PEG 1000 wurden für 2 Stunden bei 100 °C unter Rühren in einem Gefäß getrocknet (Vakuum ca. 20 mbar). Die Mischung wurde anschließend unter Stickstoff gerührt und es wurden 0,30 g Dibutylphosphat und 15,2 g 1,4-Butandiol sowie 0,30 g Zinn(II)ethylhexanoat zugesetzt. Nach Aufheizen auf 110 °C wurden 45,8 g 1,6-Hexamethylendiisocyanat zugefügt und das Gefäß wurde erhitzt, bis eine Temperatur von 160 °C erreicht war (ca. 4 Minuten). Das resultierende Polymer wurde anschließend in eine Schale gegossen und eine weitere Stunde bei 105 °C gelagert.

### Beispiel 6 (Vergleichsbeispiel)

575,4 g PEG 8000 wurden für 2 Stunden bei 100 °C unter Rühren in einem Gefäß getrocknet (Vakuum ca. 20 mbar). Anschließend wurde unter Stickstoff gerührt und es wurden 0,30 g Dibutylphosphat und 12,4 g 1,4-Butandiol sowie 0,30 g Zinn(II)ethylhexanoat zugesetzt. Nach Aufheizen auf 110 °C wurden 35,1 g 1,6-Hexamethylendiisocyanat zugefügt und das Gefäß wurde erhitzt, bis eine Temperatur von 160 °C erreicht war (ca. 6 Minuten). Das resultierende Polymer wurde anschließend in eine Schale gegossen und eine weitere Stunde bei 105 °C gelagert.

### Beispiel 7 (Vergleichsbeispiel)

528,0 g PEG 2000 wurden für 2 Stunden bei 100 °C unter Rühren in einem Gefäß getrocknet (Vakuum ca. 20 mbar). Anschließend wurde unter Stickstoff gerührt und es wurden 0,38 g Dibutylphosphat und 24,1 g 1,4-Butandiol sowie 0,38 g Zinn(II)ethylhexanoat zugesetzt. Nach Aufheizen auf 110 °C wurden 87,0 g 1,6-Hexamethylendiisocyanat zugefügt und das Gefäß wurde erhitzt, bis eine Temperatur von 160 °C erreicht war (ca. 3 Minuten). Das resultierende Polymer wurde anschließend in eine Schale gegossen und eine weitere Stunde bei 105 °C gelagert.

### Beispiel 8 (Vergleichsbeispiel)

538,5 g PEG 2000 wurden für 2 Stunden bei 100 °C unter Rühren in einem Gefäß getrocknet (Vakuum ca. 20 mbar). Anschließend wurde unter Stickstoff gerührt und es wurden 0,30 g Dibutylphosphat und 11,4 g 1,4-Butandiol sowie 0,30 g Zinn(II)ethylhexanoat zugesetzt. Nach Aufheizen auf 110 °C wurden 68,7 g 1,6-Hexamethylendiisocyanat zugefügt und das Gefäß wurde erhitzt, bis eine Temperatur von 160 °C erreicht war (ca. 2 Minuten). Das resultierende Polymer wurde anschließend in eine Schale gegossen und eine weitere Stunde bei 105 °C gelagert.

### Beispiel 9 (Vergleichsbeispiel)

528,0 g PEG 4000 wurden für 2 Stunden bei 100 °C unter Rühren in einem Gefäß getrocknet (Vakuum ca. 20 mbar). Anschließend wurde unter Stickstoff gerührt und es wurden 0,38 g Dibutylphosphat und 12,4 g 1,4-Butandiol sowie 0,30 g Zinn(II)ethylhexanoat zugesetzt. Nach Aufheizen auf 110 °C wurden 45,8 g 1,6-Hexamethylendiisocyanat zugefügt und das Gefäß wurde erhitzt, bis eine Temperatur von 160°C erreicht war (ca. 4 Minuten). Das resultierende Polymer wurde anschließend in eine Schale gegossen und eine weitere Stunde bei 105 °C gelagert.

### Verarbeitungs- und Anwendungstests

Die gemäß den Beispielen 1 bis 9 hergestellten thermoplastischen Polyurethane wurden auf Raumtemperatur abgekühlt, granuliert und im Luftstrom getrocknet. Anschließend wurde das jeweilige Granulat über einen temperierbaren Extruder mit Düsen zu Fasern verarbeitet. Die resultierenden Fasern wurden auf einer rotierenden Rolle aufgewickelt. Dabei wurde beurteilt, wie gut die Fasern herstellbar waren (Kriterien der Bewertung: guter Materialfluss, seltener Faserabriss, geringe Anzahl an Gelpartikeln) und wie gut sie weiter verarbeitbar waren (Kriterien der Bewertung: gutes Aufwickeln und Abwickeln, mechanische Stärke, geringe Klebrigkeit).

Mit den Granulaten und den Fasern wurden außerdem Tests auf Quellung in "Solution A" durchgeführt. Hier war eine hohe Aufnahme (Massenzuwachs nach 10 Minuten in einem Überschuss an "Solution A") wünschenswert. Gleichzeitig sollte sich die Faser nicht auflösen. Es sollte ein kompaktes, transparentes und stabiles Gel entstehen, welches in Bezug auf die Masse des ungequollenen Polymern zumindest die 20-fache Masse an Solution A aufgenommen hat.

### Beurteilung der einzelnen Versuche

**Skala: 1 - sehr gut bis 5 - sehr schlecht bzw. nicht durchführbar:**

| Versuch Nr. | Spinnbarkeit | Mechanische Eigenschaften der Fasern | Gel - Eigenschaften | Gewichtszunahme nach 10 Minuten in g pro 1 g des Polymers |
|---|---|---|---|---|
| 1)* | 2 | 1 | 1 | 29 |
| 2)* | 1 | 2 | 2 | 29 |
| 3)* | 2 | 2 | 3 | 25 |
| 4)* | 2 | 2 | 2 | 25 |
| 5)* | 1 | 1 | 2 | 23 |
| 6) | 5 | 3-4 | 5 (aufgelöst) | Nicht bestimmbar, da aufgelöst |
| 7) | 4 | 4 | 4 | 10 |
| 8) | 4 | 4 | 4 | 6 |
| 9) | 3 | 2 | 4 (teilweise gelöst) | 18 |

| | | | | |
|---|---|---|---|---|
| * Erfindungsgemäßes Beispiel | | | | |

Eine gute Verarbeitbarkeit in allen Schritten bis zur Faser und gute Fasereigenschaften waren bei den erfindungsgemäßen Beispielen gegeben. Die erfindungsgemäßen Fasern nahmen unter Gelbildung eine große Menge Solution A auf, wobei die gequollenen Fasern eine ausreichende mechanische Stabilität aufwiesen. Im Gegensatz hierzu konnten mit den thermoplastischen Polyurethanen der Vergleichsbeispiele nur qualitativ deutlich schlechtere Fasern hergestellt werden, die darüber hinaus weniger Solution A aufnehmen konnten. Außerdem fehlte es diesen Fasern an der mechanischen Stabilität.

## Patentansprüche

1. Thermoplastisches Polyurethan erhältlich durch Umsetzung wenigstens folgender Komponenten:
A) ein Isocyanat mit zwei Isocyanatgruppen,
B1) ein erstes Poly(ethylenglykol)polyetherdiol der Struktur (HO-(CH₂-CH₂-O)ₓ-H) mit zwei Isocyanat-reaktiven Gruppen und einem zahlenmittleren Molekulargewicht Mₙ von ≥ 6000 und ≤ 16000 g/mol,
B2) ein zweites Poly(ethylenglykol)polyetherdiol der Struktur (HO-(CH₂-CH₂-O)ₓ-H) mit zwei Isocyanat-reaktiven Gruppen und einem zahlenmittleren Molekulargewicht Mₙ, das 10 bis 80% des zahlenmittleren Molekulargewichts Mₙ des ersten Poly(ethylenglykol)polyetherdiols B1) entspricht,
C) ein Kettenverlängerer mit zwei Isocyanat-reaktiven Gruppen und einem zahlenmittleren Molekulargewicht Mₙ von ≥ 60 und < 600 g/mol,
D) gegebenenfalls ein Katalysator und
E) gegebenenfalls Hilfsmittel und Zusatzstoffe,
**dadurch gekennzeichnet, dass** der Kettenverlängerer C) wenigstens eine Verbindung ausgewählt aus Ethandiol, 1,6-Hexandiol, 1,4-Butandiol, 1,12-Dodecandiol, Isophorondiamin, Ethylendiamin, 1,2-Propylendiamin, 1,3-Propylendiamin, N-Methyl-propylen-1,3-diamin, N,N'-Dimethylethylendiamin, Terephthalsäure-bis-ethylenglykol, Terephthalsäure-bis-1,4-butandiol, 1,4-Di(-hydroxyethyl)-hydrochinon, bevorzugt Ethandiol, 1,6-Hexandiol, 1,4-Butandiol, 1,12-Dodecandiol und besonders bevorzugt 1,4-Butandiol ist und
wobei das Äquivalenzverhältnis des Isocyanats A) zu den Poly(ethylenglykol)polyetherdiolen B1) und B2) zwischen 1,5 : 1,0 und 10,0 : 1,0 liegt und die NCO-Kennzahl, gebildet aus dem mit 100 multiplizierten Quotienten der Äquivalenzverhältnisse der Isocyanatgruppen und der Summe der Isocyanat-reaktiven Gruppen 90 bis 105 beträgt.

2. Thermoplastisches Polyurethan nach Anspruch 1, **dadurch gekennzeichnet, dass** außer den Poly(ethylenglykol)polyetherdiolen B1) und B2) keine weiteren Diole eines zahlenmittleren Molekulargewichts Mₙ von ≥ 600 und ≤ 16000 g/mol mit umgesetzt werden.

3. Thermoplatisches Polyurethan nach einem der Ansprüche 1 oder 2, **dadurch gekennzeichnet, dass** das Gewichtsverhältnis des ersten Poly(ethylenglykol)polyetherdiol) B1) zu dem zweiten Poly(ethylenglykol)polyetherdiols B2) im Bereich von 1 bis 30, bevorzugt von 5 bis 25 und ganz besonders bevorzugt von 10 bis 20 liegt.

4. Thermoplatisches Polyurethan nach einem der Ansprüche 1 bis 3, **dadurch gekennzeichnet, dass** das Isocyanat eine oder mehrere Verbindungen aus der Gruppe Hexamethylendiisocyanat, Dicyclohexylmethandiisocyanat, Isophorondiisocyanat umfasst.

5. Thermoplastisches Polyurethan nach einem der Ansprüche 1 bis 4, **dadurch gekennzeichnet, dass** das zweite Poly(ethylenglykol)polyetherdiol) B2) ein zahlenmittleres Molekulargewicht Mₙ von 600 bis 4000 g/mol, bevorzugt von 1000 bis 3000 g/mol, besonders bevorzugt von 1800 bis 2200 g/ mol und ganz besonders bevorzugt von 2000 g/mol aufweist.

6. Thermoplastisches Polyurethan nach einem der Ansprüche 1 bis 5, **dadurch gekennzeichnet, dass** das zahlenmittleren Molekulargewicht Mₙ des zweiten Poly(ethylenglykol)polyetherdiols B2) 10 bis 70%, bevorzugt 15 bis 50 % und besonders bevorzugt 15 bis 33 % des zahlenmittleren Molekulargewichts Mₙ des ersten Poly(ethylenglykol)polyetherdiols B1) entspricht.

7. Thermoplastisches Polyurethan nach einem der Ansprüche 1 bis 6, **dadurch gekennzeichnet, dass** der Kettenverlängerer C) ein aliphatisches Diol oder ein (cyclo)aliphatisches Diamin ist.

8. Thermoplastisches Polyurethan nach einem der Ansprüche 1 bis 7, **dadurch gekennzeichnet, dass** die NCO-Kennzahl 92 bis 104, bevorzugt 95 bis 102 und besonders bevorzugt 97 bis 100 beträgt.

9. Verfahren zur Herstellung eines thermoplastischen Polyurethans nach einem der Ansprüche 1 bis 8, **dadurch gekennzeichnet, dass** ein Gemisch I) aus den Poly(ethylenglykol)polyetherdiolen) B1), B2) und dem Kettenverlängerer C) hergerstellt und das Gemisch I) mit dem Isocyanat A) intensiv vermischt wird.

10. Verfahren nach Anspruch 9, **dadurch gekennzeichnet, dass** das Gemisch I) mit dem Isocyanat A) innerhalb von maximal 5 Sekunden homogen vermischt werden, wobei die Temperaturen des Gemisches I) und des Isocyanats A) vor dem Vermischen ≥ 60 und ≤ 150°C liegen und die Differenz der Temperaturen ≤ 50°C und bevorzugt ≤ 20°C ist.

11. Verfahren nach einem der Ansprüche 9 oder 10, **dadurch gekennzeichnet, dass** das Gemisch I) mit dem Isocyanat A) in einem Statikmischer mit einem Längen/Durchmesser-Verhältnis im Bereich von 8:1 bis 16:1 vermischt wird.

12. Thermoplastisches Polyurethan, erhältlich nach einem Verfahren gemäß einem der Ansprüche 9 bis 11.

## Claims

1. Thermoplastic polyurethane obtainable by reacting at least the following components:
A) an isocyanate having two isocyanate groups,
B1) a first poly(ethylene glycol) polyether diol of the structure (HO-(CH₂ CH₂ O)ₓ-H) with two isocyanate-reactive groups and a number-average molecular weight Mₙ of ≥ 6000 and ≤ 16 000 g/mol,
B2) a second poly(ethylene glycol) polyether diol of the structure (HO-(CH₂ CH₂ O)ₓ-H) with two isocyanate-reactive groups and a number-average molecular weight Mₙ which is equal to from 10 to 80% of the number-average molecular weight Mₙ of the first poly(ethylene glycol) polyether diol B1),
C) a chain extender having two isocyanate-reactive groups and a number-average molecular weight Mₙ of ≥ 60 and < 600 g/mol,
D) optionally a catalyst, and
E) optionally auxiliaries and added substances,
**characterized in that** said chain extender C) is at least one compound selected from ethanediol, 1,6-hexanediol, 1,4-butanediol, 1,12-dodecanediol, isophoronediamine, ethylenediamine, 1,2-propylenediamine, 1,3-propylenediamine, N-methylpropylene-1,3-diamine, N,N'-dimethylethylenediamine, terephthalic acid bis(ethylene glycol), terephthalic acid bis-1,4-butanediol, 1,4-di(-hydroxyethyl)hydroquinone, preferably ethanediol, 1,6-hexanediol, 1,4-butanediol, 1,12-dodecanediol and more preferably 1,4-butanediol, and
wherein the equivalence ratio of said isocyanate A) to said poly(ethylene glycol) polyether diols B1) and B2) is between 1.5:1.0 and 10.0:1.0 and the NCO index, formed by multiplying the quotient of the equivalence ratios of the isocyanate groups and the sum total of the isocyanate-reactive groups by 100, is from 90 to 105.

2. Thermoplastic polyurethane according to Claim 1, **characterized in that** aside from said poly(ethylene glycol) polyether diols B1) and B2) no further diols having a number-average molecular weight Mₙ of ≥ 600 and ≤ 16 000 g/mol are co-reacted.

3. Thermoplastic polyurethane according to either of Claims 1 and 2, **characterized in that** the weight ratio of said first poly(ethylene glycol) polyether diol) B1) to said second poly(ethylene glycol) polyether diol B2) is in the range from 1 to 30, preferably from 5 to 25 and most preferably from 10 to 20.

4. Thermoplastic polyurethane according to any of Claims 1 to 3, **characterized in that** the isocyanate comprises one or more compounds from the group hexamethylene diisocyanate, dicyclohexylmethane diisocyanate, isophorone diisocyanate.

5. Thermoplastic polyurethane according to any of Claims 1 to 4, **characterized in that** the second poly(ethylene glycol) polyether diol) B2) has a number-average molecular weight Mₙ of 600 to 4000 g/mol, preferably of 1000 to 3000 g/mol, more preferably of 1800 to 2200 g/mol and most preferably of 2000 g/mol.

6. Thermoplastic polyurethane according to any of Claims 1 to 5, **characterized in that** the number-average molecular weight Mₙ of said second poly(ethylene glycol) polyether diol B2) is equal to from 10 to 70%, preferably from 15 to 50% and more preferably from 15 to 33% of the number-average molecular weight Mₙ of said first poly(ethylene glycol) polyether diol B1).

7. Thermoplastic polyurethane according to any of Claims 1 to 6, **characterized in that** said chain extender C) is an aliphatic diol or a (cyclo)aliphatic diamine.

8. Thermoplastic polyurethane according to any of Claims 1 to 7, **characterized in that** the NCO index is from 92 to 104, preferably from 95 to 102 and more preferably from 97 to 100.

9. Method of producing a thermoplastic polyurethane according to any of Claims 1 to 8, **characterized in that** it comprises preparing a mixture I) of said poly(ethylene glycol) polyether diols) B1), B2) and said chain extender C) and intensively mixing said mixture I) with said isocyanate A).

10. Method according to Claim 9, **characterized in that** said mixture I) are mixed homogeneously with said isocyanate A) for not more than 5 seconds, wherein the temperatures of said mixture I) and of said isocyanate A) before said mixing are ≥ 60 and ≤ 150°C and the difference between the temperatures is ≤ 50°C and preferably ≤ 20°C.

11. Method according to either of Claims 9 and 10, **characterized in that** said mixture I) is mixed with said isocyanate A) in a static mixer having a length/diameter ratio ranging from 8:1 to 16:1.

12. Thermoplastic polyurethane obtainable by a method according to any of Claims 9 to 11.

## Revendications

1. Polyuréthane thermoplastique pouvant être obtenu par la mise en réaction d'au moins les composants suivants :
A) un isocyanate contenant deux groupes isocyanate,
B1) un premier poly(éthylène glycol)polyétherdiol de structure (HO-(CH₂-CH₂-O)ₓ-H) contenant deux groupes réactifs avec les isocyanates et ayant un poids moléculaire moyen en nombre Mₙ ≥ 6 000 et ≤ 16 000 g/mol,
B2)un deuxième poly(éthylène glycol)polyétherdiol de structure (HO-(CH₂-CH₂-O)ₓ-H) contenant deux groupes réactifs avec les isocyanates et ayant un poids moléculaire moyen en nombre Mₙ, qui correspond à 10 à 80 % du poids moléculaire moyen en nombre Mₙ du premier poly(éthylène glycol)polyétherdiol B1),
C) un allongeur de chaînes contenant deux groupes réactifs avec les isocyanates et ayant un poids moléculaire moyen en nombre Mₙ ≥ 60 et < 600 g/mol,
D) éventuellement un catalyseur et
E) éventuellement des adjuvants et additifs,
**caractérisé en ce que** l'allongeur de chaînes C) est au moins un composé choisi parmi l'éthanediol, le 1,6-hexanediol, le 1,4-butanediol, le 1,12-dodécanediol, l'isophoronediamine, l'éthylène-diamine, la 1,2-propylène-diamine, la 1,3-propylène-diamine, la N-méthyl-propylène-1,3-diamine, la N,N'-diméthyléthylène-diamine, l'acide téréphtalique-bis-éthylène glycol, l'acide téréphtalique-bis-1,4-butanediol, la 1,4-di(-hydroxyéthyl)-hydroquinone, de préférence l'éthanediol, le 1,6-hexanediol, le 1,4-butanediol, le 1,12-dodécanediol et de manière particulièrement préférée le 1,4-butanediol, et
le rapport équivalent entre l'isocyanate A) et les poly(éthylène glycol)polyétherdiols B1) et B2) est compris entre 1,5:1,0 et 10,0:1,0, et l'indice NCO, formé par le quotient des rapports équivalents des groupes isocyanate et de la somme des groupes réactifs avec les isocyanate multiplié par 100, est de 90 à 105.

2. Polyuréthane thermoplastique selon la revendication 1, **caractérisé en ce qu'**outre les poly(éthylène glycol)polyétherdiols B1) et B2), aucun diol supplémentaire ayant un poids moléculaire moyen en nombre Mₙ ≥ 600 et ≤ 16 000 g/mol n'est mis en réaction.

3. Polyuréthane thermoplastique selon l'une quelconque des revendications 1 ou 2, **caractérisé en ce que** le rapport en poids entre le premier poly(éthylène glycol)polyétherdiol B1) et le deuxième poly(éthylène glycol)polyétherdiol B2) se situe dans la plage allant de 1 à 30, de préférence de 5 à 25 et de manière tout particulièrement préférée de 10 à 20.

4. Polyuréthane thermoplastique selon l'une quelconque des revendications 1 à 3, **caractérisé en ce que** l'isocyanate comprend un ou plusieurs composés du groupe constitué par le diisocyanate d'hexaméthylène, le diisocyanate de dicyclohexylméthane, le diisocyanate d'isophorone.

5. Polyuréthane thermoplastique selon l'une quelconque des revendications 1 à 4, **caractérisé en ce que** le deuxième poly(éthylène glycol)polyétherdiol B2) présente un poids moléculaire moyen en nombre Mₙ de 600 à 4 000 g/mol, de préférence de 1 000 à 3 000 g/mol, de manière particulièrement préférée de 1 800 à 2 200 g/mol et de manière tout particulièrement préférée de 2 000 g/mol.

6. Polyuréthane thermoplastique selon l'une quelconque des revendications 1 à 5, **caractérisé en ce que** le poids moléculaire moyen en nombre Mₙ du deuxième poly(éthylène glycol)polyétherdiol B2) correspond à 10 à 70 %, de préférence 15 à 50 % et de manière particulièrement préférée 15 à 33 % du poids moléculaire moyen en nombre Mₙ du premier poly(éthylène glycol)polyétherdiol B1).

7. Polyuréthane thermoplastique selon l'une quelconque des revendications 1 à 6, **caractérisé en ce que** l'allongeur de chaînes C) est un diol aliphatique ou une diamine (cyclo)aliphatique.

8. Polyuréthane thermoplastique selon l'une quelconque des revendications 1 à 7, **caractérisé en ce que** l'indice NCO est de 92 à 104, de préférence de 95 à 102 et de manière particulièrement préférée de 97 à 100.

9. Procédé de fabrication d'un polyuréthane thermoplastique selon l'une quelconque des revendications 1 à 8, **caractérisé en ce qu'**un mélange I) des poly(éthylène glycol)polyétherdiols B1), B2) et de l'allongeur de chaînes C) est fabriqué, et le mélange I) est mélangé intensivement avec l'isocyanate A).

10. Procédé selon la revendication 9, **caractérisé en ce que** le mélange I) est mélangé de manière homogène avec l'isocyanate A) en au plus 5 secondes, les températures du mélange I) et de l'isocyanate A) avant le mélange étant ≥ 60 et ≤ 150 °C, et la différence entre les températures étant ≤ 50 °C et de préférence ≤ 20 °C.

11. Procédé selon l'une quelconque des revendications 9 ou 10, **caractérisé en ce que** le mélange I) est mélangé avec l'isocyanate A) dans un mélangeur statique ayant un rapport longueur/diamètre dans la plage allant de 8:1 à 16:1.

12. Polyuréthane thermoplastique, pouvant être obtenu par un procédé selon l'une quelconque des revendications 9 à 11.
